# EUROPÄISCHE PATENTSCHRIFT

(11) **EP 2 441 653 B1**
(45) Veröffentlichungstag und Bekanntmachung des Hinweises auf die Patenterteilung: **06.04.2016**
(21) Anmeldenummer: 11008156.9
(22) Anmeldetag: 08.10.2011
(51) Int. Cl.: B62D 63/02, B62D 21/14, B62D 47/00

(54) **Bodengruppe für eine Mehrzahl von Bauvarianten einer Karosserie eines Personenkraftwagens, insbesondere mit Heckantriebsaggregat**
Floor assembly for a number of construction variants of a bodywork of a passenger vehicle, in particular with rear-wheel drive engine
Dessous de caisse pour une multitude de versions de construction d'une carrosserie d'un véhicule de tourisme, notamment dotée d'un agrégat d'entraînement de capot

(30) Priorität: 13.10.2010 DE 102010048350; 23.02.2011 DE 102011012124
(43) Veröffentlichungstag der Anmeldung: 18.04.2012
(73) Patentinhaber: Daimler AG, 70327 Stuttgart (DE)
(72) Erfinder: Benz, Eberhard, 71116 Gärtringen (DE); Carl, Michael, 70839 Gerlingen (DE); Rudlof, Volker, 72414 Rangendingen (DE); Sebastian, Peter, 28844 Weyhe (DE)
(74) Vertreter: JENSEN & SON

(56) Entgegenhaltungen:
- EP-A1- 1 302 387
- WO-A1-03/070543
- DE-A1- 2 610 299
- DE-A1-102008 055 738
- US-A1- 2002 014 008
- US-A1- 2008 169 677

## Beschreibung

Die Erfindung betrifft eine Bodengruppe für eine Mehrzahl von Bauvarianten einer Karosserie eines Personenkraftwagens. Des Weiteren betrifft die Erfindung ein Verfahren zum Herstellen einer derartigen Bodengruppe.

In den letzten Jahren ist die Anzahl von Fahrzeugbaureihen mit jeweiligen Varianten beziehungsweise Derivaten, also beispielsweise Cabrio, Limousine, Roadster etc., erheblich gestiegen. Somit müssen für jede Fahrzeugbaureihe und deren Varianten beziehungsweise Derivate jeweilige Fahrzeugkarosserien konzipiert, entwickelt und hergestellt werden. Dies führt offensichtlich zu erheblichen Kosten.

Aus der DE 10 2008 055 738 A1 geht eine gattungsgemäße Bodengruppe für eine Mehrzahl von Bauvarianten einer Kraftfahrzeugkarosserie hervor, bei der ein Modulsystem vorgeschlagen wird, welches die Kombination unterschiedlicher Hauptbodenmodule mit dem jeweils gleichen Vorderwagenmodul und Heckwagenmodul ermöglicht. Die Hauptbodenmodule können sich dabei im Antriebskonzept unterscheiden, wobei die unterschiedlichen Antriebskonzepte, beispielsweise Hybridantrieb oder Elektroantrieb, unterschiedliche Anforderungen insbesondere an die Tunnelstruktur der Hauptbodenmodule stellen.

Aufgabe der vorliegenden Erfindung ist es daher, eine Bodengruppe eines Personenkraftwagens, insbesondere mit Heckantriebsaggregat, sowie ein Verfahren zum Herstellen einer derartigen Bodengruppe zu schaffen, mittels welchen sich die Kosten für eine jeweilige Bauvariante der Karosserie des Personenkraftwagens erheblich reduzieren lassen.

Diese Aufgabe wird erfindungsgemäß durch eine Bodengruppe mit den Merkmalen des Patentanspruchs 1 gelöst. Des Weiteren wird diese Aufgabe erfindungsgemäß durch ein Verfahren zum Herstellen einer solchen Bodengruppe gemäß Patentanspruch 8 gelöst. Vorteilhafte Ausgestaltungen mit zweckmäßigen und nicht-trivialen Weiterbildungen der Erfindung sind in den abhängigen Patentansprüchen angegeben.

Die erfindungsgemäße Boderigruppe nach Patentanspruch 1 umfasst ein variantenübergreifendes Vorbaumodul und ein variantenübergreifendes Heckmodul für die Mehrzahl von Bauvarianten der Karosserie des Personenkraftwagens, wobei Vorbaumodul und Heckmodul über eine einen Mitteltunnel aufweisende Bodenanordnung miteinander verbunden sind, die in Abhängigkeit der jeweiligen Bauvarianten der Karosserie des Personenkraftwagens ausgebildet ist. Das Vorbaumodul und das Heckmodul sind also variantenübergreifend über die Mehrzahl von Bauvarianten der Karosserie zumindest im Wesentlichen identisch ausgebildet, wohingegen die jeweilige Bodenanordnung, die das Vorbaumodul und das Heckmodul miteinander verbinden, entsprechend variabel in Abhängigkeit der jeweiligen Bauvariante, für die die Bodengruppe geschaffen werden soll, gestaltet ist. Dies hat den Vorteil, dass das Vorbaumodul und das Heckmodul sowie gegebenenfalls weitere variantenübergreifende Module für mehrere Bauvarianten konzipiert, entwickelt und schließlich hergestellt werden können, was die Entstehungskosten der Karosserie insgesamt deutlich reduziert. Die Anpassung der Bodengruppe erfolgt somit im Wesentlichen durch die Variation der Bodenanordnung, die in Abhängigkeit der jeweiligen Bauvariante in ihrer Dimensionierung oder hinsichtlich anderer Eigenschaften wie beispielsweise der Werkstoffwahl oder dergleichen variiert werden kann.

Die Bodengruppe zeichnet sich dadurch aus, dass deren Bodenanordnung ein variantenspezifisches erstes Hauptbodenmodul aufweist, auf welches vom Karosserieinnenraum her der Mitteltunnel aufgesetzt ist, und dass der aufgesetzte Mitteltunnel ein geschlossenes Profil aufweist. Dies ermöglicht die Realisierung eines zentralen mittigen Lastpfads bei allen Fahrzeugvarianten trotz deren modularen Bauweise und gegebenenfalls verschiedener Radstandslängen. Über den so gebildeten zentralen mittigen Lastpfad werden bei einem Fahrzeug mit im Heckbereich angeordnetem Antriebsaggregat bei einem Heckaufprall die Kräfte in den Mitteltunnel eingeleitet beziehungsweise das Antriebsaggregat kann sich an den Mitteltunnel abstützen. Die gleichen Vorteile können sich bei einem Frontalaufprall eines Fahrzeugs mit im Vorderwagenbereich angeordnetem Antriebsaggregat ergeben. Dadurch, dass der Mitteltunnel -anders als bei bekannten Bodengruppen- nicht in das Hauptbodenmodul eingeformt beziehungsweise integriert ist und im fertigen Karosserierohbau eben keine randoffene Aufnahme zur Anordnung beispielsweise einer Kardanwelle aufweist, sondern erfindungsgemäß auf ein vorzugsweise durchgängiges Hauptbodenmodul aufgesetzt ist und ein geschlossenes Profil aufweist, kann der hierdurch besonders stabile Mitteltunnel seine Funktion als zentraler Lastpfad erfüllen und in zumindest zwei unterschiedlichen Längenvarianten durch unterschiedlichen Beschnitt eines Vorläuferbauteils hergestellt werden, wodurch die Kosten für die Bodengruppe weiter reduziert werden können.

Dabei erstreckt sich in weiterer Ausgestaltung der Erfindung die Bodenanordnung zumindest im Wesentlichen im Bereich des Hauptbodens der jeweiligen Bauvariante, da in diesem Bereich entsprechende Anpassungen besonders günstig vorzunehmen sind.

In bevorzugter Ausführungsform ist vorgesehen, dass die mindestens eine Schnittstelle zwischen dem Vorbaumodul und der jeweiligen Bodenanordnung und die mindestens eine Schnittstelle zwischen dem Heckmodul und der jeweiligen Bodenanordnung unabhängig von der jeweiligen Bodenanordnung immer gleich bzw. zumindest im Wesentlichen identisch ist. So kann ohne bzw. ohne größere Modifikationen die Bodenanordnung ausgetauscht und mit dem Vorbau- und dem Heckmodul in definierter Weise verbunden werden, was insbesondere produktionsseitig vorteilhaft ist.

Eine weitere vorteilhafte Ausführungsform sieht vor, dass außenseitig an das variantenspezifische erste Hauptbodenmodul jeweilige variantenspezifische seitliche Längsträgerelemente angesetzt sind. So kann beispielsweise als erstes Hauptbodenmodul variantenspezifisch ein kurzes Modul eingesetzt werden, um beispielsweise ein zwei- beziehungsweise dreisitziges Fahrzeug mit demzufolge kurzem Hauptboden zu schaffen.

Es ist dabei besonders vorteilhaft, wenn der gesamte Hauptboden von dem ersten Hauptbodenmodul gebildet wird. Dies ermöglicht eine besonders steife und stabile Auslegung der Bodengruppe. Alternative Längenvarianten der Bodengruppe können dabei durch die Verwendung unterschiedlicher Hauptbodenmodule geschaffen werden. Hierzu wird zweckmäßigerweise ein gemeinsames Vorläuferbauteil bereitgestellt, aus welchem durch unterschiedlichen Beschnitt die gewünschten Längenvarianten des Hauptbodenmoduls erzeugt werden.

Um ein Fahrzeug mit einem längeren Hauptboden zu schaffen, so ist alternativ hierzu gemäß Patentanspruch 4 ein zweites Hauptbodenmodul vorgesehen, welches an das erste Hauptbodenmodul angesetzt ist. Auf diese Art und Weise kann beispielsweise eine Bodengruppe für ein Fahrzeug mit vier beziehungsweise fünf Sitzplätzen oder mehr geschaffen werden.

An die Bodenanordnung gemäß Patentanspruch 3 beziehungsweise Patentanspruch 4 sind dann jeweilige variantenspezifische seitliche Längsträgerelemente angesetzt, die an die jeweilige Länge der beiden Hauptbodenmodule beziehungsweise des Hauptbodens insgesamt angepasst sind.

Des Weiteren können dabei Längsträgerelemente eingesetzt werden, welche in Abhängigkeit der jeweiligen Bauvariante in ihrer Breite differieren. Somit können beispielsweise unterschiedliche Fahrzeugbreiten auf einfache Weise durch entsprechende Ausgestaltung der Längsträgerelemente in ihrer Breite angepasst werden.

In weiterer vorteilhafter Ausgestaltung der Erfindung ist an das variantenübergreifende Vorbaumodul oder das variantenübergreifende Heckmodul ein jeweiliges zumindest teilweise variantenspezifisches Biegeträgermodul angesetzt. Durch entsprechende Variation der Länge des Biegeträgermoduls ist es beispielsweise möglich, die Länge des jeweiligen Überhangs der Karosserie zu variieren. Außerdem ist es möglich, beispielsweise jeweilige Energieabsorptionselemente der Biegeträgermodule so zu variieren, dass diese an die Fahrzeugmasse und an die gesetzlichen Bestimmungen angepasst sind.

Die vorstehend im Zusammenhang mit der erfindungsgemäßen Bodengruppe genannten Vorteile gelten in ebensolcher Weise für das Verfahren gemäß Anspruch 8 zum Herstellen einer Bodengruppe für eine Mehrzahl von Bauvarianten einer Karosserie eines Personenkraftwagens, mit einem variantenübergreifenden Vorbaumodul, einem variantenübergreifenden Heckmodul und einer Mehrzahl von variantenspezifischen Modulen, die in Abhängigkeit der jeweiligen Bauvariante der Karosserie des Personenkraftwagens ausgebildet ind. Das Verfahren zeichnet sich dadurch aus, dass zumindest eines der variantenspezifischen Module in zumindest zwei unterschiedlichen Längenvarianten durch unterschiedlichen Beschnitt eines Vorläuferbauteils bereit gestellt wird.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Fig. 1: eine Perspektivansichten auf jeweilige Explosionsdarstellungen von zwei Bodengruppen für zwei verschiedene Bauvarianten einer Karosserie eines Personenkraftwagens, welche jeweils ein identisches variantenübergreifendes Vorbaumodul und ein identisches variantenübergreifendes Heckmodul aufweisen, welche über eine Bodenanordnung miteinander verbunden sind, die in Abhängigkeit der jeweiligen Bauvarianten der Karosserie des Personenkraftwagens ausgebildet ist;
- Fig. 2a, 2b: eine Perspektivansicht und eine Schnittansicht entlang einer in Fahrzeuglängsrichtung beziehungsweise in Fahrzeughochrichtung verlaufenden Mittellängsschnittebene auf die Bodengruppe für eine kürzere Bauvariante der Karosserie des Personenkraftwagens gemäß Fig. 1 bzw. Fig. 5, wobei die Bodenanordnung ein variantenspezifisches erstes Hauptbodenmodul aufweist, an welches äußenseitig jeweilige variantenspezifische seitliche Längsträgerelemente angesetzt sind;

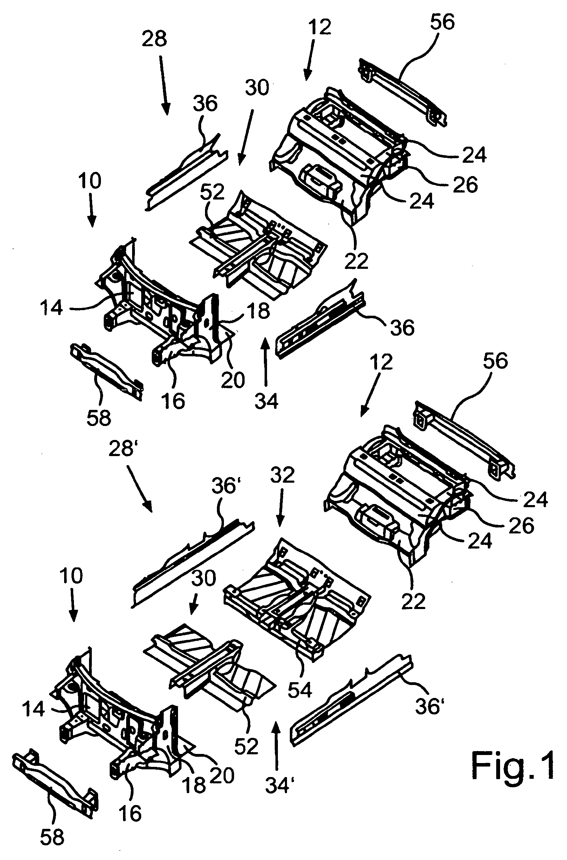

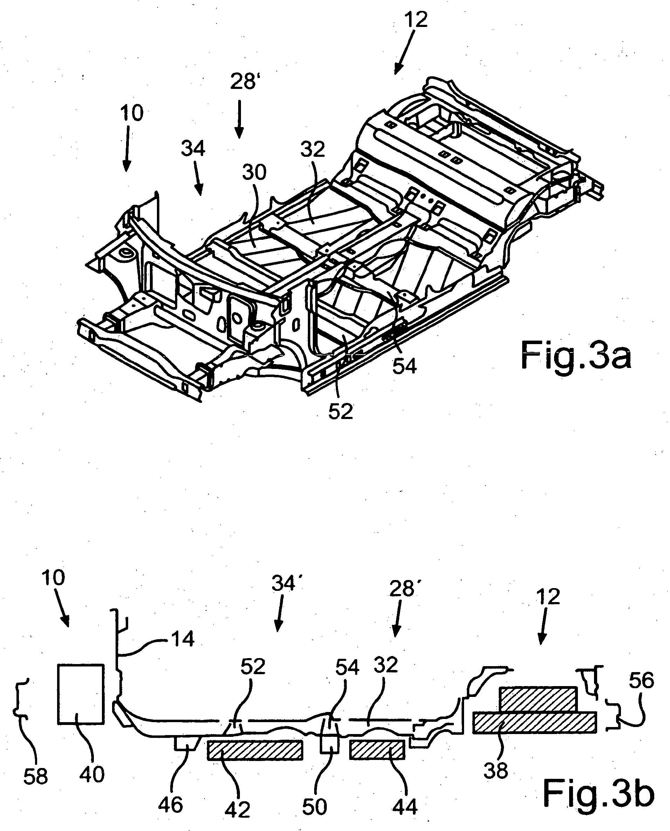

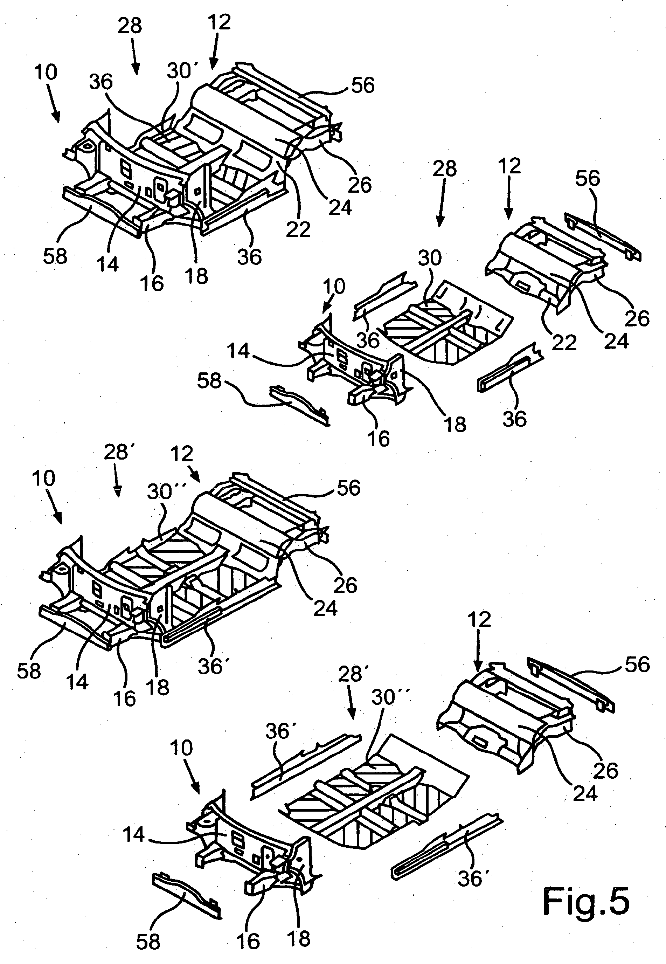

- Fig. 3a, 3b: eine Perspektivansicht sowie eine Schnittansicht entlang einer in Fahrzeuglängsrichtung beziehungsweise in Fahrzeughochrichtung verlaufenden Mittellängsschnittebene, wobei die Bodengruppe für eine längere Bauvariante der Karosserie gemäß Fig. 1 bzw. Fig. 5 vorgesehen ist, wobei die Bodenanordnung neben dem ersten variantenspezifischen Hauptbodenmodul ein zweites variantenspezifisches Hauptbodenmodul aufweist, welches an das erste Hauptbodenmodul angesetzt ist und somit den Hauptboden verlängert, und wobei außenseitig der beiden Hauptbodenmodule jeweilige variantenspezifische seitliche Längsträgerelemente angesetzt sind;
- Fig. 4a, 4b: jeweilige Perspektivansichten auf variantenspezifische Biegeträgermodule für das Vorbaumodul und das Heckmodul;
- Fig. 5: eine Perspektivansichten auf jeweilige Explosionsdarstellungen von zwei alternativen Bodengruppen für zwei verschiedene Bauvarianten einer Karosserie eines Personenkraftwagens, welche jeweils ein identisches variantenübergreifendes Vorbaumodul und ein identisches variantenübergreifendes Heckmodul aufweisen, welche über eine Bodenanordnung miteinander verbunden sind, die in Abhängigkeit der jeweiligen Bauvarianten der Karosserie des Personenkraftwagens ausgebildet ist; wobei ein Hauptboden der Bodenanordnung einteilig ausgebildet ist;
- Fig. 6: den Bereich um einen Mitteltunnel des Hauptbodens;
- Fig. 7: eine perspektivische Darstellung der Anordnung eines Betriebsmitteltanks an einem Hauptboden einer Kraftwagenkarosserie für zwei unterschiedliche Kraftwagenvarianten;
- Fig. 8: eine schematische Darstellung der Anordnung eines zusätzlichen Querträgers im Hauptbodenbereich einer Bodengruppe eines Kraftwagens; und
- Fig. 9: eine perspektivische Darstellung des Übergangsbereichs zwischen Hauptboden und Heckboden einer Bodengruppe für einen Kraftwagen.

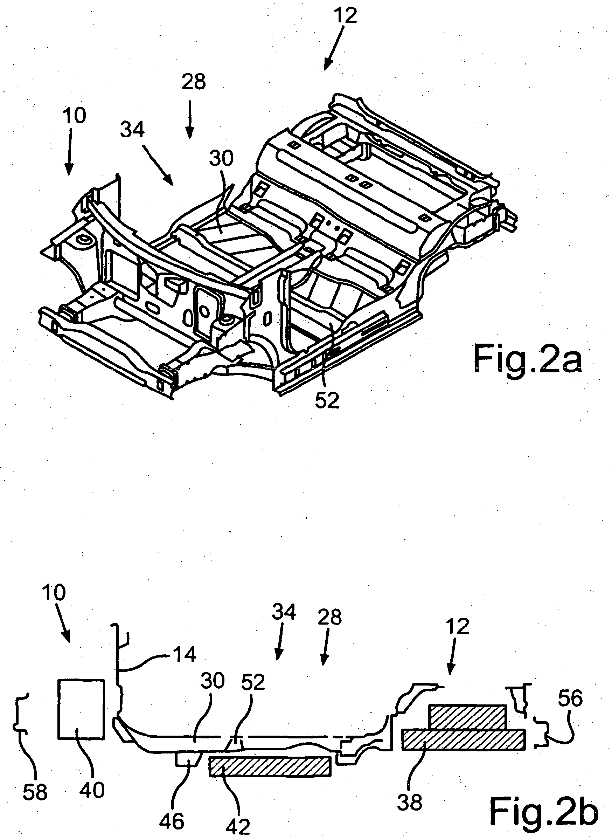

In Fig. 1 sind in jeweiliger Perspektivansicht zwei Explosionsdarstellungen von jeweiligen Bodengruppen für eine entsprechende Karosserie eines Personenkraftwagens dargestellt. Die oben dargestellte Bodengruppe ist dabei außerdem in den Fig. 2a und 2b dargestellt und wird im Weiteren noch näher erläutert werden. Ebenfalls wird im Weiteren noch die in Fig. 1 unten dargestellte Bodengruppe erläutert werden, welche außerdem in den Fig. 3a und 3b ersichtlich ist.

Die beiden Bodengruppen sind Teil eines Baukastensystems, mit welchem eine Mehrzahl von unterschiedlichen Bodengruppen für unterschiedliche Bauvarianten der Karosserie des Personenkraftwagens hergestellt werden können.

Die in Fig. 1 oben dargestellte Bodengruppe ist vorliegend für eine zweisitzige beziehungsweise dreisitzige Karosserie eines Personenkraftwagens, beispielsweise einem Coupe oder dergleichen, konzipiert. Die unten dargestellte Bodengruppe ist vorwiegend für eine verlängerte Bauvariante der Karosserie (z.B. mit vier oder mehr Sitzplätzen oder einer Transportervariante) konzipiert.

Beide Bodengruppen umfassen jeweils ein variantenübergreifendes Vorbaumodul 10 und ein variantenübergreifendes Heckmodul 12, die unabhängig von der jeweiligen Bauvariante der Karosserie zumindest im Wesentlichen identisch ausgebildet sind. Es ist erkennbar, dass das Vorbaumodul 10 als wesentliche Elemente eine Stirnwand 14 jeweilige Längsträger 16, jeweilige Seitenwandelemente 18 für entsprechende Türsäulen sowie einen Hauptbodenbereich 20 umfasst. Das vorliegende Vorbaumodul 10 ist dabei aus einer Mehrzahl von Blechbauteilen beziehungsweise Blechschalenelementen zusammengesetzt. Andere Bauweisen sind ebenfalls denkbar.

Das Heckmodul 12 umfasst im Wesentlichen eine Heckwand 22, jeweilige Querträgerelemente 24 sowie jeweilige Seitenwandelemente 26.

Um nun eine Anpassung der Bodengruppe beispielsweise an unterschiedliche Längen der jeweiligen Karosserie des Personenkraftwagens zu ermöglichen, sind das Vorbaumodul 10 und das Heckmodul 12 über eine jeweilige Bodenanordnung 28, 28' miteinander verbunden, die in Abhängigkeit der jeweiligen Bauvariante der Karosserie ausgebildet ist.

Demzufolge umfasst die Bodenanordnung 28 der in Fig. 1 oben dargestellten Karosserie lediglich ein erstes Hauptbodenmodul 30, welches vorderseits an dem Vorbaumodul 10 und hintererseits an dem Heckmodul 12 angesetzt ist.

Die längere Bodengruppe, welche in Fig. 1 unten dargestellt ist, umfasst hingegen eine Bodenanordnung 28', die neben dem ersten Hauptbodenmodul 30 ein zweites Hauptbodenmodul 32 umfasst. Dieses Hauptbodenmodul 32 ist an der hinteren Seite des ersten Hauptbodenmoduls 30 angesetzt und verbindet dieses mit dem Heckmodul 12. Mithin bildet das zweite Hauptbodenmodul 32 eine Verlängerung der Bodengruppe aus.

Während also bei der kurzen Bodengruppe gemäß Fig. 1 oben ein entsprechender Hauptboden 34 durch lediglich das erste Hauptbodenmodul 30 gebildet wird, wird ein Hauptboden 34' der Baugruppe gemäß Fig. 1 unten durch die beiden Hauptbodenmodule 30, 32 gebildet.

Eine Alternative zur Ausbildung von Längenvariationen des Hauptbodens 34 durch die Verwendung mehrerer Hauptbodenmodule 30, 32 ist in Fig. 5 dargestellt. Der Hauptboden 34 wird hierbei in allen Längenvarianten einteilig durch ein einziges Hauptbodenmodul 30', 30" gebildet. Es ist dabei besonders zweckmäßig, die unterschiedlich langen Hauptbodenmodule 30', 30" durch unterschiedlichen Beschnitt eines gemeinsamen Vorläuferbauteils herzustellen, um so Herstellungskosten einzusparen. In der oben dargestellten kurzen Variante entspricht das einteilige Hauptbodenmodul 30' gemäß Fig. 5 den in Figur 1 getrennt ausgebildeten Bereichen 20 und 52. In der unten gezeigten langen Variante entspricht das Hauptbodenmodul 30" den Bereichen 20, 52 und 54 gemäß Figur 1.

Angepasst an die unterschiedliche Länge des jeweiligen Hauptbodens 34, 34' der entsprechenden Bodengruppe werden des Weiteren unterschiedliche Längsträgerelemente 36, 36' eingesetzt, welche jeweils der entsprechenden Bodenanordnung 28 beziehungsweise 28' zugeordnet sind. Es ist aus Fig. 1 erkennbar, dass bei der oberen Bodengruppe, welche einen kürzeren Hauptboden 34 aufweist, entsprechend kürzere Längsträgerelemente 36 zum Einsatz kommen als es die Längsträgerelemente 36' sind, welche sich gemäß der in Fig. 1 unten dargestellten Baugruppe sowohl über das Hauptbodenmodul 30 wie auch das Hauptbodenmodul 32 erstrecken. Die Längsträgerelemente 36, 36' sind somit variantenspezifisch unterschiedlich. Darüber hinaus können auch Längsträgerelemente zum Einsatz kommen, welche unterschiedliche Breiten aufweisen, um somit die Fahrzeugbreite insgesamt variieren zu können.

Es ist somit aus Fig. 1 erkennbar, dass durch Variation der jeweiligen Bodenanordnung 28, 28' die Bodengruppe in ihrer Länge zu variieren ist. Hierdurch wird ein maximaler Anteil an Gleichteilen realisiert und eine kostengünstigere Realisierung verschiedener Radstandslängen ermöglicht.

In Fig. 2a ist die in Fig. 1 oben dargestellte Baugruppe nochmals in einer Perspektivansicht komplett dargestellt. Darüber hinaus ist in Fig. 2b eine Schnittansicht entlang einer in Fahrzeughochrichtung beziehungsweise in Fahrzeuglängsrichtung verlaufenden Mittellängsschnittebene gezeigt. Dabei ist erkennbar, dass ein Antriebsaggregat 38, welches beispielsweise ebenfalls modulartig ausgebildet sein kann, im Bereich des Heckmoduls 12 angeordnet ist. Somit ist durch das Heckmodul 12 ein kompaktes Karosserie- und Aggregatemodul geschaffen. Im Bereich des Heckmoduls 12 können dabei weitere Aggregate oder dergleichen vorgesehen sein.

Im Bereich des Vorbaumoduls 10 ist ein Aggregat 40 erkennbar, welches in seiner Größe jedoch so ausgestaltet ist, dass es nicht blockbildend ist. Somit wird im Bereich des Vorbaus die freie Deformationslänge nicht eingeschränkt, was insbesondere bei Kleinfahrzeugen von großer Wichtigkeit ist.

Unterhalb der Bodenanordnung 28 ist im vorliegenden Fall ein Energiemodul 42 angeordnet, welches beispielsweise einen entsprechenden Tank oder entsprechende Batterien umfassen kann.

In den Fig. 3a und 3b ist - analog zu den Fig. 2a und 2b - die in Fig. 1 unten dargestellte Baugruppe gezeigt. Diese unterscheidet sich hinsichtlich der Aggregate beziehungsweise Module im Wesentlichen dadurch, dass aufgrund der längeren Ausbildung der Bodenanordnung 28' ein zweites Energiemodul 44 unterhalb des Hauptbodens 34' angeordnet ist. Natürlich könnte hier auch ein einziges Energiemodul vorgesehen sein, welches entsprechend groß gestaltet ist.

Die Anschlussstellen zwischen dem Vorbaumodul 10, dem Heckmodul 12 und den jeweiligen Hauptbodenmodulen 30, 32 wie auch gegebenenfalls zu den Längsträgerelementen 36, 36' sind idealerweise so ausgelegt, dass sie sowohl für die kleine Baugruppe wie auch die große Baugruppe gemäß Fig. 1 eingesetzt werden können. Die Fügestellen an den Anschlussstellen sind idealerweise am Fahrzeugnetz ausgerichtet und beispielsweise horizontal oder vertikal orientiert, wodurch Karosserietoleranzen für die unterschiedlichen Radstände problemlos einstellbar sind.

Aus den Schnittdarstellungen gemäß den Fig. 2b beziehungsweise 3b ist des Weiteren erkennbar, dass unterhalb des Hauptbodens 34, 34'jeweilige Querträger 46, 48, 50 vorgesehen sind. Der Querträger 46 ist dabei dem vorderen Hauptbodenmodul 30 zugeordnet und somit sowohl bei der Baugruppe gemäß Fig. 2b wie auch bei derjenigen gemäß Fig. 3b vorhanden. Dasselbe gilt für den Querträger 48, welcher als Teil des Heckmoduls 12 an dessen vorderem Ende ausgebildet ist. Der Querträger 50 hingegen ist lediglich bei der längeren Baugruppe gemäß Fig. 3b vorhanden, da dieser unterhalb des die Baugruppe verlängernden zweiten Hauptbodenmoduls 32 angeordnet ist. Die Querträger 46, 48, 50 dienen dabei insbesondere zum Schutz der Energiemodule 42 beziehungsweise 44 gegen eine seitliche Deformation. Dabei stützen die Querträger 46, 48, 50 jeweilige Längsträgerelemente 36 beziehungsweise 36' ab.

Ein weiterer Schutz ergibt sich dabei durch einen Sitzquerträger oder Sitzkonsolen 54 des vorderen, ersten Hauptbodenmoduls 30 und/oder einen Sitzquerträger oder Sitzkonsolen 54 des zweiten Hauptbodenmoduls 32. Diese sind jeweils von oben auf die Hauptbodenmodule 30 beziehungsweise 32 aufgesetzt.

Die Lagebeziehungen einzelner Bauteile in den Schnittdarstellungen gemäß Fig. 2b und Fig. 3b lassen sich im Übrigen auch auf Bodengruppen gemäß Fig. 5 übertragen. Diese unterscheiden sich lediglich durch die einteilige Ausführung des Haupbodens in Form der Hauptbodenmodule 30', 30".

Die gesamte jeweilige Bodengruppe ist allgemein für Personenkraftwagen so ausgebildet, dass mehrere Generationen von Fahrzeug- und Aufbauvarianten generiert werden können. Die Bodengruppe oder einzelne Module können dabei sowohl aus einer Metalllegierung beziehungsweise entsprechen Blechen geschaffen sein wie auch aus Kunststoff, beispielsweise CFK. Hybridvarianten sind ebenfalls denkbar.

Zusätzlich kann im Bereich der Bodenanordnung 28, 28' eine Strebenanordnung vorgesehen sein, welche die Steifigkeit dann erhöht, wenn die Baugruppe für ein Cabriolet oder einen Roadster mit offenem Dach zum Einsatz kommt.

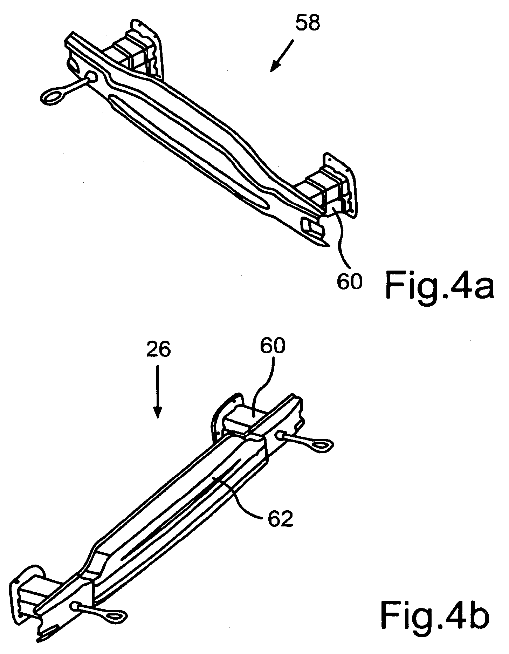

Schließlich ist in den Fig. 4a und 4b jeweils eine Perspektivansicht eines hinteren beziehungsweise vorderen Biegeträgermoduls 56, 58 gezeigt.

Das vordere, in Fig. 4a gezeigte Biegeträgermodul 58 umfasst dabei zwei Energieabsorptionselemente 60, welche in ihrer Länge und/oder Gestaltung je nach Bauvariante der Baugruppe variieren können.

Dasselbe gilt auch für das hintere Biegeträgermodul 56, wobei dies zusätzlich ein Trägerelement 62 umfasst, welches je nach Bauvariante der Baugruppe angesetzt sein kann oder nicht.

Somit kann über variable Längen der Energieabsorptionselemente 60 beziehungsweise durch die Variation des jeweiligen Biegeträgermoduls 56 beziehungsweise 58 eine flexible Anpassung an alle Funktionsanforderungen hinsichtlich Fahrzeugmasse, Gesetzes- und Marktanforderungen oder dergleichen erfolgen. Außerdem kann durch die Variation des jeweiligen Biegeträgermoduls 56, 58 die entsprechend gewünschte Überhanglänge an unterschiedliche Stylinggeometrien des jeweiligen Personenkraftwagens angepasst werden.

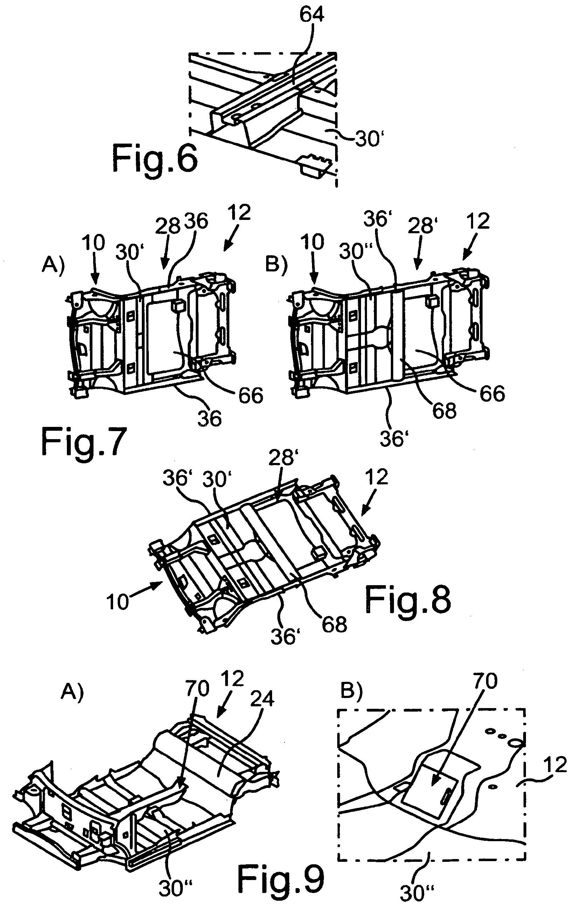

Bei allen gezeigten Varianten wird ein zentraler mittiger Lastpfad trotz modularer Bauweise und verschiedenen Radstandslängen mittels eines geschlossenen Profils umgesetzt. Hierbei ist der übliche Tunnel 64 im Karosserieinnenraum auf einen durchgängigen Boden 30' aufgesetzt, wie in Fig. 6 gezeigt.

Die Bodenstruktur ist im Bereich des Energiespeichers 66 angehoben. Eine identische Position für verschiedenartigste Energiespeicher 66 (Flüssig-/Gastank oder Elektrobatterie oder dgl.) ist in der Plattform unabhängig von einem kurzen oder langen Fahrzeug umsetzbar. Ein entscheidender Vorteil ist, dass somit die Heckantriebseinheit im Allgemeinen bzw. der Heckboden 12 im Speziellen maximal verblockt ausgeführt werden kann. Dies ist für zwei unterschiedliche Fahrzeugvarianten in den Fig. 7a und b dargestellt.

Ein zusätzlicher durchgängiger Querträger 68 unterhalb der Bodenstruktur kann vor allem bei längeren Fahrzeugen zur Unterstützung der Insassensicherheit im Seitenaufprall realisiert werden, wie in Fig. 8 gezeigt.

Eine weitere, in den Fig. 9a und b veranschaulichte Besonderheit zeichnet das Plattformkonzept aus. Trotz modularer, verschiebbarer Bauweise zwischen Hauptboden und Heckboden ist eine steifigkeits- und NVH-optimierte Verbindung im Bereich 70 der Hinterachsanbindung umgesetzt.

## Patentansprüche

1. Bodengruppe für eine Mehrzahl von Bauvarianten einer Karosserie eines Personenkraftwagens, insbesondere mit Heckantriebsaggregat, mit einem variantenübergreifenden Vorbaumodul (10) und einem variantenübergreifenden Heckmodul (12), welche über eine einen Tunnel (64) und einen Boden (30') aufweisenden Bodenanordnung (28, 28') miteinander verbunden sind, die in Abhängigkeit der jeweiligen Bauvariante der Karosserie des Personenkraftwagens ausgebildet ist;
**dadurch gekennzeichnet, dass**
der Boden (30') durchgängig ausbildet und der Tunnel (64) im Karosserieinnenraum auf diesen zur Ausbildung eines zentralen mittigen Lastpfades unter Ausbildung eines geschlossenen Profils aufgesetzt ist.

2. Bodengruppe nach Anspruch 1,
**dadurch gekennzeichnet, dass**
die Bodenanordnung (28, 28') zumindest im Wesentlichen einem Hauptboden (34, 34') der jeweiligen Bauvariante der Karosserie des Personenkraftwagens bildet.

3. Bodengruppe nach Anspruch 1 oder 2,
**dadurch gekennzeichnet, dass**
die Bodenanordnung (28) ein variantenspezifisches erstes Hauptbodenmodul (30, 30', 30") aufweist und dass außenseitig an das variantenspezifische erste Hauptbodenmodul (30, 30', 30") jeweilige variantenspezifische seitliche Längsträgerelemente (36) angesetzt sind.

4. Bodengruppe nach Anspruch 3,
**dadurch gekennzeichnet, dass**
die Bodenanordnung (28') wenigstens ein variantenspezifisches zweites Hauptbodenmodul (32) aufweist, welches an das erste Hauptbodenmodul (30) angesetzt ist, und dass außenseitig an die wenigstens beiden variantenspezifischen Hauptbodenmodule (30, 32) jeweilige variantenspezifische seitliche Längsträgerelemente (36') angesetzt sind.

5. Bodengruppe nach Anspruch 3,
**dadurch gekennzeichnet, dass**
der gesamte Hauptboden einteilig durch das erste Hauptbodenmodul (30, 30', 30") gebildet wird.

6. Bodengruppe nach Anspruch 5,
**dadurch gekennzeichnet, dass**
das erste Hauptbodenmodul (30, 30', 30") in zumindest zwei unterschiedlichen Längenvarianten durch unterschiedlichen Beschnitt eines Vorläuferbauteils bereitstellbar ist.

7. Bodengruppe nach einem der vorhergehenden Ansprüche,
**dadurch gekennzeichnet, dass**
an das variantenübergreifende Vorbaumodul (10) oder das variantenübergreifende Heckmodul (12) ein jeweiliges variantenspezifisches Biegeträgermodul (56, 58) angesetzt ist.

8. Verfahren zum Herstellen einer Bodengruppe für eine Mehrzahl von Bauvarianten einer Karosserie eines Personenkraftwagen, bei welchem ein variantenübergreifendes Vorbaumodul (10) und ein variantenübergreifendes Heckmodul (12) über eine Bodenanordnung (28, 28') miteinander verbunden werden, die in Abhängigkeit der jeweiligen Bauvariante der Karosserie des Personenkraftwagens ausgebildet wird,
**dadurch gekennzeichnet, dass**
- eine für eine erste Karosseriebauvariante vorgesehene erste Bodenanordnung (28) durch ein variantenspezifisches erstes Hauptbodenmodul (30, 30', 30") gebildet wird, an das außenseitig jeweilige variantenspezifische seitliche Längsträgerelemente (36) angesetzt werden, und dass
- eine für eine zweite Karosseriebauvariante vorgesehene zweite Bodenanordnung (28) an das erste Hauptbodenmodul (30) wenigstens ein variantenspezifisches zweites Hauptbodenmodul (32) angesetzt wird und dass außenseitig an die wenigstens beiden variantenspezifischen Hauptbodenmodule (30, 32) jeweilige variantenspezifische seitliche Längsträgerelemente (36') angesetzt werden.

9. Verfahren nach Anspruch 8,
**dadurch gekennzeichnet, dass**
der gesamte Hauptboden einteilig durch das erste Hauptbodenmodul (30, 30', 30") gebildet wird.

10. Verfahren nach Anspruch 9,
**dadurch gekennzeichnet, dass**
das erste Hauptbodenmodul (30, 30', 30") in zumindest zwei unterschiedlichen Längenvarianten durch unterschiedlichen Beschnitt eines Vorläuferbauteils bereitgestellt wird.

11. Verfahren nach einem der Ansprüche 8 bis 10,
**dadurch gekennzeichnet, dass**
an das variantenübergreifende Vorbaumodul (10) oder das variantenübergreifende Heckmodul (12) ein jeweiliges variantenspezifisches Biegeträgermodul (56, 58) angesetzt wird.

## Claims

1. Floor assembly for a number of construction variants of a bodywork of a passenger car, in particular with a rear-wheel drive engine, comprising a variant-spanning front end module (10) and a variant-spanning rear end module (12), which are joined to one another via a floor arrangement (28, 28') comprising a tunnel (64) and a floor (30'), which floor arrangement (28, 28') is designed in dependence on the respective variant of the bodywork of the passenger car,
**characterised in that**
the floor (30') is designed to be continuous and the tunnel (64) is placed thereon in the bodywork interior to form a central load path while forming a closed profile.

2. Floor assembly according to claim 1,
**characterised in that**
the floor arrangement (28, 28') at least substantially forms a main floor (34, 34') of the respective variant of the bodywork of the passenger car.

3. Floor assembly according to claim 1 or 2,
**characterised in that**
the floor arrangement (28) comprises a variant-specific first main floor module (30, 30', 30"), and **in that** respective variant-specific lateral side member elements (36) are fitted to the variant-specific first main floor module (30, 30', 30") on the outside.

4. Floor assembly according to claim 3,
**characterised in that**
the floor arrangement (28) comprises at least one variant-specific second main floor module (32), which is fitted to the first main floor module (30), and **in that** variant-specific lateral side member elements (36') are fitted to each of the at least two variant-specific main floor modules (30, 32) on the outside.

5. Floor assembly according to claim 3,
**characterised in that**
the entire main floor is formed as a single part by the first main floor module (30, 30', 30").

6. Floor assembly according to claim 5,
**characterised in that**
the first main floor module (30, 30', 30") can be made available in at least two different length variants by trimming a precursor component in different ways.

7. Floor assembly according to any of the preceding claims, **characterised in that**
a respective variant-specific bumper bracket module (56, 58) is fitted to the variant-spanning front end module (10) or to the variant-spanning rear end module (12).

8. Method for producing a floor assembly for a number of construction variants of a bodywork of a passenger car, wherein a variant-spanning front end module (10) and a variant-spanning rear end module (12) are joined to one another via a floor arrangement (28, 28') designed in dependence on the respective variant of the bodywork of the passenger car,
**characterised in that**
- a first floor arrangement (28) provided for a first bodywork variant is represented by a variant-specific first main floor module (30, 30', 30"), to which respective variant-specific lateral side member elements (36) are fitted, and **in that**
- in a second floor arrangement (28) provided for a second bodywork variant, at least one variant-specific second main floor module (32) is fitted to the first main floor module (30), and **in that** respective variant-specific lateral side member elements (36') are fitted to the at least two variant-specific main floor modules (30, 32) on the outside.

9. Method according to claim 8,
**characterised in that**
the entire main floor is formed as a single part by the first main floor module (30, 30', 30").

10. Method according to claim 9,
**characterised in that**
the first main floor module (30, 30', 30") can be made available in at least two different length variants by trimming a precursor component in different ways.

11. Method according to any of claims 8 to 10,
**characterised in that**
a respective variant-specific bumper bracket module (56, 58) is fitted to the variant-spanning front end module (10) or to the variant-spanning rear end module (12).

## Revendications

1. Élément de plancher pour une pluralité de variantes de construction d'une carrosserie d'un véhicule de tourisme, en particulier à propulsion arrière, comprenant un module d'avant-corps (10) qui est valable pour toutes les variantes et un module arrière (12) qui est valable pour toutes les variantes, qui sont reliés l'un à l'autre par un système de plancher (28, 28') présentant un tunnel (64) et un fond (30') ; ledit système de plancher étant conçu en fonction de la variante de construction respective de la carrosserie du véhicule de tourisme ; **caractérisé en ce que** le plancher (301) est continu et le tunnel (64) est encastré dans l'espace intérieur de la carrosserie sur celui-ci pour former un chemin de charge central en formant un profil fermé.

2. Élément de plancher selon la revendication 1, **caractérisé en ce que** le système de plancher (28, 28') forme au moins essentiellement un plancher principal (34, 34') des variantes de construction respectives de la carrosserie du véhicule de tourisme.

3. Élément de plancher selon la revendication 1 ou 2, **caractérisé en ce que** le système de plancher (28) présente un premier module de plancher principal (30, 30', 30") spécifiques aux variantes et **en ce que** côté extérieur sur le premier module de plancher principal (30, 30', 30") spécifique aux variantes sont encastrés des éléments longitudinaux de support (36) latéraux spécifiques aux variantes respectives.

4. Élément de plancher selon la revendication 3, **caractérisé en ce que** le système de plancher (28') présente au moins un second module de plancher principal (32) spécifiques aux variantes qui est encastré sur le premier module de plancher principal (30) et **en ce que** côté extérieur sur lesdits deux modules de plancher principal (30, 32) spécifiques aux variantes sont encastrés des éléments longitudinaux de support (36') latéraux spécifiques aux variantes respectives.

5. Élément de plancher selon la revendication 3, **caractérisé en ce que** le système de plancher entier est formé par le premier module de plancher principal (30, 30', 30").

6. Élément de plancher selon la revendication 5, **caractérisé en ce que** le premier module de plancher principal (30, 30', 30") peut être préparé dans au moins deux variantes de longueur différentes par découpe diverse d'un composant précurseur.

7. Élément de plancher selon l'une quelconque des revendications précédentes, **caractérisé en ce que** sur le module d'avant-corps (10) qui est valable pour toutes les variantes ou sur le module arrière (12) qui est valable pour toutes les variantes est encastré un module de support sollicité en flexion (56, 58) spécifique aux variantes respectives.

8. Procédé de fabrication d'un élément de plancher pour une pluralité de variantes de construction d'une carrosserie d'un véhicule de tourisme, selon lequel un module d'avant-corps (10) qui est valable pour toutes les variantes et un module arrière (12) qui est valable pour toutes les variantes sont reliés l'un à l'autre par un système de plancher (28, 28') qui est conçu en fonction de la variante de construction respective de la carrosserie du véhicule de tourisme, **caractérisé en ce que**
- un premier système de plancher (28) prévu pour une première variante de construction de carrosserie est formé par un premier module de plancher principal (30, 30', 30") spécifique aux variantes sur lequel sont encastrés côté extérieur des éléments longitudinaux de support (6) latéraux spécifiques aux variantes respectives et **en ce que**
- un second système de plancher (28) prévu pour une seconde variante de construction de carrosserie est encastré sur le premier module de plancher principal (30) d'au moins un second module de plancher principal (32) spécifique aux variantes et **en ce que** côté extérieur sur lesdits deux modules de plancher principaux (30, 32) spécifiques aux variantes sont encastrés des éléments longitudinaux de support (36') latéraux spécifiques aux variantes respectives.

9. Procédé selon la revendication 8, **caractérisé en ce que** le système de plancher entier est formé en un seul tenant à l'aide du premier module de plancher principal (30, 30', 30").

10. Procédé selon la revendication 9, **caractérisé en ce que** le premier module de plancher principal (30, 30', 30") peut être préparé dans au moins deux variantes de longueur différentes par découpe diverse d'un composant précurseur.

11. Procédé selon l'une quelconque des revendications précédentes 8 à 10, **caractérisé en ce que** sur le module d'avant-corps (10) qui est valable pour toutes les variantes ou sur le module arrière (12) qui est valable pour toutes les variantes est encastré un module de support sollicité en flexion (56, 58) spécifique aux variantes respectives.
